# EUROPÄISCHE PATENTSCHRIFT

(11) **EP 3 381 727 B1**
(45) Veröffentlichungstag und Bekanntmachung des Hinweises auf die Patenterteilung: **26.08.2020**
(21) Anmeldenummer: 18164035.0
(22) Anmeldetag: 26.03.2018
(51) Int. Cl.: B60J 7/16

(54) **AUFSTELLBARES FAHRZEUGDACH**
LIFTABLE VEHICLE ROOF
TOIT DE VÉHICULE POUVANT ÊTRE RELEVÉ

(30) Priorität: 29.03.2017 DE 102017106729
(43) Veröffentlichungstag der Anmeldung: 03.10.2018
(73) Patentinhaber: REIMO Reisemobil-Center GmbH, 63329 Egelsbach (DE)
(72) Erfinder: Sterzing, Erik, 64560 Riedstadt (DE)
(74) Vertreter: Habermann Intellectual Property Partnerschaft von Patentanwälten mbB

(56) Entgegenhaltungen:
- DE-A1- 10 352 130
- DE-U1- 29 807 458
- GB-A- 2 059 498

## Beschreibung

Die Erfindung betrifft ein aufstellbares Fahrzeugdach mit einem verlagerbaren Dachelement und mit einer Lagereinrichtung, mit welcher das Dachelement an einem eine Dachöffnung eines Fahrzeugs umgebenden Rahmen verlagerbar gelagert ist, so dass das Dachelement in einer Schließposition die Dachöffnung bedeckt und in einer Öffnungsposition mindestens bereichsweise von der Dachöffnung beabstandet ist.

Ein derartiges aufstellbares Fahrzeugdach kann beispielsweise bei Wohnmobilen zu verschiedenen Zwecken verwendet werden. Mit einem aufgestellten Fahrzeugdach kann bei Standzeiten des Wohnmobils die Kopffreiheit vergrößert und der Aufenthalt in dem Wohnmobil angenehmer gestaltet werden. Es sich weiterhin zahlreiche Wohnmobile bekannt, bei denen unterhalb des Fahrzeugdachs eine Schlaf- oder Liegefläche angeordnet ist. Die üblicherweise mit einem Matratzenelement oder Polsterelement gebildete Schlaf- oder Liegefläche ist unmittelbar unterhalb einer Dachöffnung des Fahrzeugdaches angeordnet und kann nur dann bestimmungsgemäß genutzt werden, wenn das Fahrzeugdach ein aufstellbares Dachelement aufweist, welches vor einer Benutzung der Schlaf- oder Liegefläche von der Dachöffnung weg verlagert wird und einen sich durch die Dachöffnung hindurch erstreckenden Freiraum freigibt. Das verlagerbare Dachelement kann längs einer ersten Seitenkante bzw. an einem ersten Ende schwenkbar an einem die Dachöffnung umgebenden Rahmen gelagert sein. Zum Ausstellen des Dachelements wird das Dachelement beabstandet von der ersten Seitenkante nach oben gedrückt und dadurch verschwenkt. Es ist ebenfalls möglich, das verlagerbare Dachelement mit einem im Bereich des ersten Endes angeordneten Scherenschwenkmechanismus an dem Rahmen zu lagern, so dass bei einer Aufstellbewegung das Dachelement um die erste Seitenkante verschwenkt und gleichzeitig beispielsweise 20 cm bis 40 cm von dem Rahmen angehoben wird, während ein dem ersten Ende gegenüberliegendes Aufstellende des Dachelements weiter von dem Rahmen weg verlagert wird. Das Aufstellende kann oftmals mehr als 80 cm und gegebenenfalls bis über 100 cm von dem Rahmen weg verlagert werden. Das verlagerbare Dachelement kann eine von mehr als 180 cm bzw. mehr als 200 cm von dem ersten Ende bis zu dem gegenüberliegenden Verstellende aufweisen, so dass der bei einem vollständig bis in eine Öffnungsposition ausgestellten Dachelement ein komfortabler Freiraum zwischen der Schlaf- und Liegefläche und dem ausgestellten Dachelement bereitgestellt wird. Es ist ebenfalls möglich, das Dachelement ohne eine Schwenkbewegung parallel und längs aller Seitenkanten gleichmäßig von einem Dachelementrahmen weg zu verlagern, bzw. anzuheben.

Ein derartiges aufstellbares Fahrzeugdach kann auch bei nicht selbst angetriebenen Wohnwagen, bei Frachtfahrzeugen oder Lastanhängern oder aber bei ebenfalls als Fahrzeuge bezeichneten Booten und Schiffen verwendet werden, um im Bedarfsfall einen durch das ausgestellte Dachelement vergrößerten Freiraum zur Verfügung zu stellen.

Zwischen dem verstellbaren Dachelement und dem Rahmen können ein oder mehrere flexible oder zumindest verlagerbare Wandelemente angeordnet sein. So ist beispielsweise bei Wohnmobilen üblicherweise ein zusammenlegbarer Wandstreifen aus einem textilen Material, insbesondere aus einem Zeltplanenmaterial zwischen dem Dachelement und dem Rahmen so angeordnet, dass der Wandstreifen bei einem geschlossenen Dachelement mit einem geringen Raumbedarf entlang eines Umfangs des Rahmens zusammengefaltet zwischen dem Rahmen und dem Dachelement verstaut ist, während sich der Wandstreifen bei einer Aufstellbewegung entfaltet und in der Öffnungsposition des Dachelements ein Wandelement bildet, welches den zwischen dem Dachelement und dem Rahmen gebildeten Freiraum umgibt.

Bei den aus der Praxis bekannten aufstellbaren Fahrzeugdächern wird das Dachelement üblicherweise mit Hilfe einer Gasdruckfeder betätigt und verlagert. Die Gasdruckfeder ist an dem Rahmen und an dem Dachelement gelenkig gelagert und erstreckt sich in der Schließposition im Wesentlichen parallel zu einem Umfangsrand der Dachöffnung zwischen dem Rahmen und dem Dachelement. Dies bedingt, dass die Gasdruckfeder zu Beginn einer Aufstellbewegung des Dachelements im Wesentlichen quer zu der gewünschten Verlagerungsrichtung angeordnet ist und deshalb noch keine nennenswerte Unterstützung der Aufstellbewegung durch die Federkraft der Gasdruckfeder bieten kann. Erst wenn das verlagerbare Dachelement im Bereich der Gasdruckfeder einen merklichen Abstand zu dem Rahmen aufweist und die Gasdruckfeder zunehmend in die Ausstellrichtung des Dachelements gerichtet ist, kann die Aufstellbewegung durch die Gasdruckfeder unterstützt bzw. gegen Ende der Aufstellbewegung selbsttätig durch die Federkraft bewirkt werden.

Ein derartiges Fahrzeugdach für ein Wohnmobil, welches mit Hilfe einer Gasdruckfeder aufgestellt werden kann, ist beispielsweise in DE 298 07 458 U1 beschrieben.

An Stelle einer oder mehrerer kostengünstigen Gasdruckfedern sind auch mit einer pneumatischen oder hydraulischen Antriebseinrichtung versehene Aufstelleinrichtungen bekannt. Die Verlagerung des Dachelements kann bei diesen Aufstelleinrichtungen ohne eine manuelle Unterstützung oder Betätigung durchgeführt werden. Allerdings ist der Kostenaufwand für die Herstellung einer derartigen Aufstelleinrichtung erheblich.

Es wird deshalb als eine Aufgabe der vorliegenden Erfindung angesehen, ein aufstellbares Fahrzeugdach so auszugestalten, dass mit einfachen konstruktiven Mitteln eine zuverlässige und ohne manuelle Unterstützung mögliche Verlagerung des Dachelements bewirkt werden kann.

Diese Aufgabe wird bei einem aufstellbaren Fahrzeugdach der eingangs genannten Gattung erfindungsgemäß dadurch gelöst, dass die Lagereinrichtung eine Aufstelleinrichtung mit mindestens einer ausfahrbaren Schubkette aufweist, die zwischen dem Rahmen und dem Dachelement festlegbar ist und bei einer Ausfahrbewegung der Schubkette das Dachelement von dem Rahmen weg verlagert.

Eine Schubkette besteht aus mehreren Kettengliedern, die eine Kette bildend jeweils mit benachbarten Kettengliedern verbunden sind, wobei die Kettenglieder so ausgestaltet sind, dass ein Schwenkbereich von zwei benachbarten Kettengliedern begrenzt ist und ausgehend von einer gradlinigen Ausrichtung aller Kettenglieder zwei benachbarte Kettenglieder in eine Sperrrichtung nur um einen kleinen Sperrwinkel verschwenkt werden können, während die betreffenden Kettenglieder in einer der Sperrrichtung entgegengesetzten Schwenkrichtung um etwa 90° oder mehr verschwenkt werden können. Wenn die Kettenglieder der Schubkette bei einer Ausfahrbewegung der Schubkette in die Sperrrichtung verschwenkt werden, bilden die Kettenglieder eine mehrteilige leicht gekrümmte Schubstange, die Schubkräfte übertragen kann.

Die Schubkette kann im Gegensatz zu einer Gasdruckfeder waagrecht eingebaut werden und dennoch bereits zu Beginn eines Aufstellvorgangs die volle Schubkraft auf das allmählich aufgestellte Dachelement übertragen. Eine Schubkette benötigt lediglich einen geringen Bauraum, der im Wesentlichen durch die Schubkette selbst und ein die nicht ausgefahrene Schubkette umgebendes Führungsgehäuse vorgegeben ist.

Gemäß einer möglichen Ausgestaltung des Erfindungsgedankens ist vorgesehen, dass die Lagereinrichtung derart ausgestaltet ist, dass das Dachelement längs einer Seitenkante des Dachelements um eine an dem Rahmen der Dachöffnung angeordnete Schwenkachse verschwenkbar gelagert ist und durch eine Ausfahrbewegung der Schubkette das Dachelement um die Schwenkachse verschwenkt wird. Eine derartige Ausgestaltung der Lagereinrichtung kann kostengünstig umgesetzt werden und ermöglicht es, mit geringem konstruktiven Aufwand insbesondere auf einer der Schwenkachse abgewandten Seite des Dachelements einen großzügigen Freiraum unterhalb des durch Verschwenkung aufgestellten Dachelements zur Verfügung zu stellen.

Gemäß einer als besonders vorteilhaft erachteten Ausgestaltung des Erfindungsgedankens ist alternativ vorgesehen, dass die Lagereinrichtung derart ausgestaltet ist, dass das Dachelement längs aller Seitenkanten des Dachelements von dem die Dachöffnung umgebenden Rahmen weg verlagerbar ist. Eine derartige Verlagerung des Dachelements umfasst sowohl eine vollständig parallele bzw. längs aller Seitenkanten gleichmäßige Anhebung des Dachelements von dem Rahmen als auch eine kombinierte Hubbewegung und Schwenkbewegung, wobei das Dachelement längs einer Seitenkante um einen ersten Hubweg von dem Rahmen weg verlagert wird und gleichzeitig oder anschließend durch eine Schwenkbewegung des Dachelements eine der ersten Seitenkante gegenüberliegende zweite Seitenkante des Dachelements weiter als die erste Seitenkante von dem Rahmen weg verlagert wird.

Erfindungsgemäß ist vorgesehen, dass die Aufstelleinrichtung zwei Schubketten aufweist, die an gegenüberliegenden Randbereichen des Dachelements angeordnet sind. Mit Hilfe von zwei Schubketten, die an gegenüberliegenden Randbereichen angeordnet sind, können auch große Dachelemente verkippungsfrei aufgestellt und wieder geschlossen werden. Die beiden Schubketten wirken bei dem aufgestellten Dachelement als Stützelemente, wobei auf Grund der Sperrwirkung der Schubketten das Dachelement zuverlässig in der aufgestellten Öffnungsposition festgehalten wird, da im Gegensatz zu Gasdruckfedern keine gegebenenfalls nachlassende Federkraft auf das Dachelement wirkt. Die Schubketten können in der gewünschten Position des Dachelements verriegelt werden, so dass keine gesonderte Betätigung oder Aufhaltekraft auf das Dachelement oder auf die Schubketten ausgeübt werden muss.

Es ist ebenfalls möglich und insbesondere bei großflächigen Dachelementen oder einer parallel zu einem Dachelementrahmen gewünschten Verlagerung des Dachelements zweckmäßig, mehr als zwei Schubketten zu verwenden, um eine möglichst verkippungsfreie und gleichförmige Aufstellbewegung des Dachelements zu begünstigen.

Gemäß einer vorteilhaften Ausgestaltung des Erfindungsgedankens ist vorgesehen, dass das Dachelement an einem ersten Ende mit einem Scherenschwenkmechanismus an dem Rahmen festlegbar ist, und dass die mindestens eine ausfahrbare Schubkette der Aufstelleinrichtung beabstandet zu dem Scherenschwenkmechanismus mit dem Dachelement in Wirkverbindung steht. Bei dem Scherenschwenkmechanismus kann es sich beispielsweise um eine aus der Praxis bekannte Schlafdachschere handeln, die bei einer Betätigung der Schlafdachschere sowohl ein Verschwenken des Dachelements als auch eine Hubbewegung des Dachelements bewirkt. Durch eine geeignete Ausgestaltung des Scherenschwenkmechanismus kann mit der erfindungsgemäßen Aufstelleinrichtung über die gesamte Grundfläche des Dachelements ein zusätzlicher Freiraum erzeugt werden, der es einer Person oder mehreren Personen ermöglicht, komfortabel in dem Freiraum zu liegen und zu übernachten. Es ist ebenfalls möglich, dass das Dachelement längs einer ersten Seitenkante an dem ersten Ende mit einem Scharnier oder um eine Schwenkachse verschwenkbar an dem Rahmen festlegbar ist, so dass lediglich ein Verschwenken des Dachelements ohne eine zusätzliche Hubbewegung erfolgen kann.

Um eine automatisch betätigbare Aufstellung des Dachelements zu ermöglichen ist erfindungsgemäß vorgesehen, dass die Aufstelleinrichtung eine Antriebseinrichtung für die Verlagerung der mindestens einen Schubkette aufweist. Die Antriebseinrichtung kann beispielsweise einen Elektromotor aufweisen, der über eine Energieversorgung des Fahrzeugs mit Energie versorgt werden kann. Es ist ebenfalls möglich, dass die Antriebseinrichtung eine Kurbel oder einen anderen händisch betätigbaren Antriebsmechanismus aufweist, der ein manuelles Aufstellen und Schließen des Dachelements ermöglicht.

Die Antriebseinrichtung kann zusammen mit der eingefahrenen Schubkette an dem Dachelement angeordnet sein und bei einer Ausfahrbewegung der Schubkette zusammen mit dem Dachelement angehoben und von dem Rahmen der Dachöffnung weg verlagert werden. Auf diese Weise kann die Antriebseinrichtung besser bzw. mit einfacheren Mitteln gegen eventuell eindringende Feuchtigkeit geschützt werden. Es ist ebenfalls möglich und im Hinblick auf das Eigengewicht der Antriebseinrichtung und deren Energieversorgung bei bestimmten Voraussetzungen zweckmäßig, dass die Antriebseinrichtung an dem Rahmen der Dachöffnung angeordnet und von dem Dachelement umgeben bzw. abgedeckt wird, wenn das Dachelement nicht aufgestellt ist, sondern an dem Rahmen der Dachöffnung anliegt.

Um ein unerwünschtes Verkippen oder Verhaken des Dachelements in der Lagereinrichtung zu vermeiden ist vorgesehen, dass die Aufstelleinrichtung zwei oder mehr Schubketten aufweist, die jeweils mit einer der betreffenden Schubkette zugeordneten Antriebseinrichtung verlagert werden können, wobei die zwei oder mehreren Antriebseinrichtungen miteinander synchronisiert betätigt werden können. Durch zwei, drei oder noch mehr Schubketten kann das Dachelement an mehreren Stellen jeweils beabstandet zueinander gestützt werden, so dass ein unerwünschtes Verkippen des Dachelements sowie ein Verhaken oder Verwinden des Dachelements in der Lagereinrichtung vermieden werden kann. Die synchron betriebenen Schubketten bilden im Gegensatz zu Gasdruckfedern eine Zwangsführung für das Dachelement, so dass ein Aufstellvorgang sowie ein Schließvorgang des Dachelements besonders zuverlässig durchgeführt werden können.

Erfindungsgemäß ist vorgesehen, dass die mindestens eine Schubkette eine ausfahrbare Länge von mehr als 40 cm, vorzugsweise von mehr als 60 cm aufweist. Wenn die Schubkette beabstandet zu dem ersten Ende des Dachelements, welches beispielsweise über einen Scherenschwenkmechanismus an dem Rahmen festgelegt ist, aber auch beabstandet zu dem gegenüberliegenden Aufstellende angeordnet ist, kann auf Grund der Schwenkbewegung des Dachelements mit einer ausfahrbaren Länge von 40 cm und insbesondere von 60 cm das freie Aufstellende über 100 cm angehoben werden, wodurch ein komfortabel nutzbarer Freiraum zwischen dem aufgestellten Dachelement und dem Rahmen geschaffen werden kann.

Erfindungsgemäß kann zur Unterstützung der Verlagerung des Dachelements mindestens eine Gasdruckfeder zwischen dem Dachelement und dem Rahmen angeordnet sein, mit welcher eine das Dachelement von dem Rahmen weg verlagernde Federkraft erzeugt wird. Durch eine Gasdruckfeder kann der zunächst ausschließlich über die Schubkette bewirkte Aufstellvorgang zunehmend mit der Federkraft der Gasdruckfeder unterstützt werden, so dass die Dimensionierung der Schubkette daran angepasst werden kann.

Gemäß einer vorteilhaften Ausgestaltung des Erfindungsgedankens ist vorgesehen, dass die Schubkette von dem Dachelement und/oder von dem Rahmen gelöst werden kann, um im Bedarfsfall eine manuelle Verlagerung des Dachelements zu ermöglichen. So kann eine üblicherweise automatisch mit einem Elektroantrieb betätigte Schubkette beispielsweise bei einem Ausfall der Energieversorgung oder bei einem Defekt der Antriebseinrichtung manuell betätigt werden, um das Dachelement aufstellen oder schließen zu können.

Nachfolgend wird ein exemplarisches Ausführungsbeispiel des Erfindungsgedankens näher erläutert, das schematisch in der Zeichnung dargestellt ist. Es zeigt:
Fig. 1 eine schematische Seitenansicht eines oberen Teils eines Wohnmobils mit einem aufgestellten Dachelement, und
Fig. 2 eine schematische Draufsicht auf eine Dachöffnung des Wohnmobils und auf einen die Dachöffnung umgebenden Rahmen, an welchem die Lagereinrichtung des Dachelements angeordnet ist.

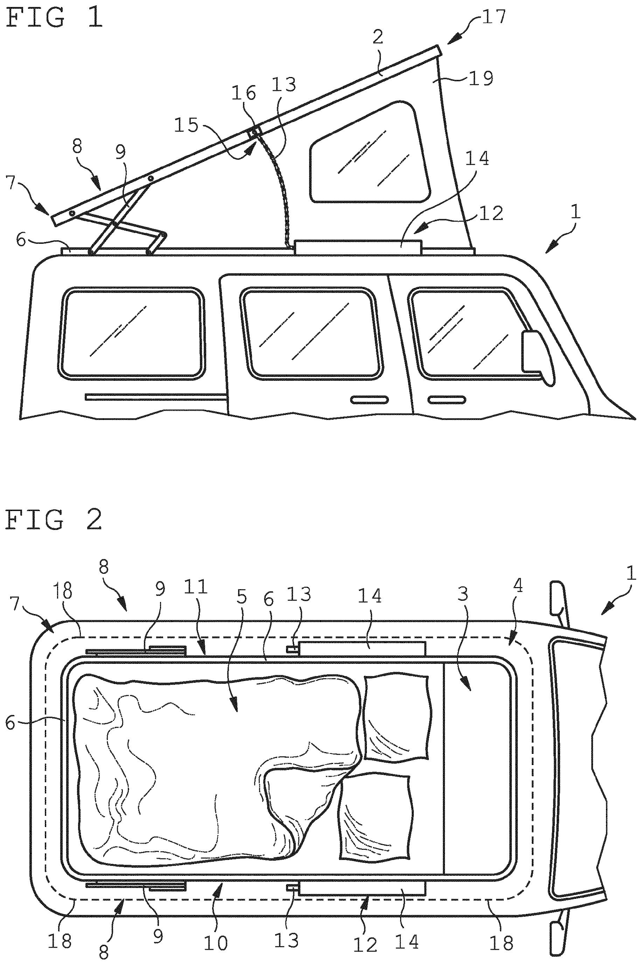

In Figur 1 ist exemplarisch eine Seitenansicht eines oberen Teils eines Wohnmobils 1 mit einem aufgestellten Dachelement 2 dargestellt. In Figur 2 ist zur Veranschaulichung eine Draufsicht auf das Wohnmobil 1 ohne das aufgestellte Dachelement 2 gezeigt, so dass eine Dachöffnung 3 und ein die Dachöffnung 3 umgebender Rahmen 4 sichtbar sind.

Die Dachöffnung 3 ist hinsichtlich ihrer Abmessungen so bemessen, dass bei Bedarf eine im Bereich der Dachöffnung 3 oder unterhalb angeordnete Liegefläche 5 ausreichend Platz für zwei Personen bietet. Der die Dachöffnung 3 umgebende Rahmen 4 weist eine zu dem Dachelement 2 gerichtete Wulst 6 auf, um unerwünscht eindringendes Regenwasser abweisen zu können und die Stabilität des Rahmens 4 zu erhöhen. Es ist ebenfalls möglich und oftmals zweckmäßig, stattdessen oder zusätzlich an einem Rand des Dachelements 2 eine umlaufende Abdichtung vorzusehen. An dem Rahmen 4 und/oder an dem Dachelement 2 können zusätzlich nicht dargestellte Dichtungseinrichtungen angeordnet sein, um bei einem geschlossenen und auf dem Rahmen 4 aufliegenden Dachelement 2 das Eindringen von Feuchtigkeit insbesondere während einer Fahrt des Wohnmobils 1 zu verhindern.

Das Dachelement 2 ist an einem heckseitigen ersten Ende 7 über einen Scherenschwenkmechanismus 8 an dem Rahmen 4 gelagert. Der Scherenschwenkmechanismus 8 beruht auf einer aus der Praxis bekannten Schlafdachschere 9, die bei einer Aufstellbewegung des Dachelements 2 sowohl eine Schwenkbewegung als auch eine Hubbewegung des ersten Endes 7 des Dachelements 2 ermöglicht. Durch die Verwendung von zwei Schlafdachscheren 9 an gegenüberliegenden Seitenrändern 10, 11 des Rahmens 4 bzw. des Dachelements 2 kann mit diesem Scherenschwenkmechanismus 8 eine zuverlässige Lagerung und Führung des Dachelements 2 bewirkt werden.

Ein Aufstellmechanismus 12 für das Dachelement 2 weist jeweils beabstandet von den Schlafdachscheren 9 an jedem Seitenrand 10, 11 des Rahmens 4 eine elektrisch ausfahrbare Schubkette 13 mit einer Antriebseinrichtung 14 für die Schubkette 13 auf. Abweichend von dem in der Figur dargestellten Ausführungsbeispiel könnte die Antriebseinrichtung 14 mit der Schubkette 13 auch an einer der Dachöffnung 3 zugewandten Unterseite des Dachelements 2 angeordnet sein. Die Schubkette 13 ist an einem nicht angetriebenen, freien Ende 15 über eine lösbare Kupplung 16 mit dem Dachelement 2 verbunden. Die Schubkette 13 ist dabei etwa mittig zwischen dem ersten Ende 7 und einem gegenüberliegenden Aufstellende 17 mit dem Dachelement 2 verbunden. Eine vollständig ausgefahrene Schubkette 13 weist eine Länge von etwa 60 cm auf, so dass das bei dem Wohnmobil 1 nach vorne zeigende Aufstellende 17 mehr als 100 cm oberhalb des Rahmens 4 aufgestellt ist.

Das Dachelement 2 umgreift in einem geschlossenen Zustand den Rahmen 4, wie es in Figur 2 mit einer gestrichelten Linie 18 angedeutet ist. Zwischen dem nach oben vorspringenden Wulst 6 des Rahmens 4 und einer nach unten gerichteten Randabkantung des Dachelements 2 sind der Aufstellmechanismus 12 und die Schlafdachscheren 9 angeordnet, die zusammen eine Lagereinrichtung für das aufstellbare Dachelement 2 bilden. Sofern es die Platzverhältnisse zulassen können an dem Rahmen 4 noch ein oder mehrere nicht dargestellte Gasdruckfedern angeordnet sein, um bei einer Aufstellbewegung des Dachelements 2 die angetriebenen Schubketten 13 zu unterstützen. Die beiden Antriebseinrichtungen 14 sind mit einer Energieversorgungseinrichtung des Wohnmobils 1, beispielsweise mit einer geeigneten Batterie verbunden. Dabei werden die beiden Antriebseinrichtungen 14 über eine nicht dargestellte Steuerungseinrichtung synchron zueinander angesteuert und betätigt, um ein unerwünschtes Verkippen oder Verkanten des Dachelements 2 während einer Öffnungsbewegung oder Schließbewegung zu vermeiden.

Zwischen dem Dachelement 2 und dem Rahmen 4 ist ein zusammenlegbarer Zeltbalg 19 auf, der in einer geschlossenen Position des Dachelements 2 zwischen dem nach oben vorspringenden Wulst 6 des Rahmens 4 und der nach unten gerichteten Randabkantung des Dachelements 2 verstaut werden kann. Wenn das Dachelement 2 in die vollständig geöffnete Position verlagert wird, wird der Zeltbalg 19 zunehmend aufgespannt und bildet ein flexibles Wandelement aus einem Wandstreifen, der einen zwischen dem aufgestellten Dachelement 2 und dem Rahmen 4 gebildeten Freiraum umgibt. Der Zeltbalg 19 kann durchsichtige Fenster sowie beispielsweise mit einem Reißverschluss verschließbare Öffnungen aufweisen.

## Patentansprüche

1. Aufstellbares Fahrzeugdach mit einem verlagerbaren Dachelement (2) und mit einer Lagereinrichtung, mit welcher das Dachelement (2) an einem eine Dachöffnung (3) eines Fahrzeugs umgebenden Rahmen (4) verlagerbar gelagert ist, so dass das Dachelement (2) in einer Schließposition die Dachöffnung (3) bedeckt und in einer Öffnungsposition mindestens bereichsweise von der Dachöffnung (3) beabstandet ist, **dadurch gekennzeichnet, dass** die Lagereinrichtung eine Aufstelleinrichtung (12) mit mindestens einer ausfahrbaren Schubkette (13) aufweist, die zwischen dem Rahmen (4) und dem Dachelement (2) festlegbar ist und bei einer Ausfahrbewegung der Schubkette (13) das Dachelement (2) von dem Rahmen (4) weg verlagert.

2. Aufstellbares Fahrzeugdach nach Anspruch 1, **dadurch gekennzeichnet, dass** die Lagereinrichtung derart ausgestaltet ist, dass das Dachelement (2) längs einer Seitenkante des Dachelements (2) um eine an dem Rahmen (4) der Dachöffnung (3) angeordnete Schwenkachse verschwenkbar gelagert ist und durch eine Ausfahrbewegung der Schubkette (13) das Dachelement (2) um die Schwenkachse verschwenkt wird.

3. Aufstellbares Fahrzeugdach nach Anspruch 1, **dadurch gekennzeichnet, dass** die Lagereinrichtung derart ausgestaltet ist, dass das Dachelement (2) längs aller Seitenkanten des Dachelements (2) von dem die Dachöffnung (3) umgebenden Rahmen (4) weg verlagerbar ist.

4. Aufstellbares Fahrzeugdach nach Anspruch 3, **dadurch gekennzeichnet, dass** das Dachelement (2) an einem ersten Ende (7) mit einem Scherenschwenkmechanismus (8) an dem Rahmen (4) festlegbar ist, und dass die mindestens eine ausfahrbare Schubkette (13) der Aufstelleinrichtung (12) beabstandet zu dem Scherenschwenkmechanismus (8) mit dem Dachelement (2) in Wirkverbindung steht.

5. Aufstellbares Fahrzeugdach nach einem der vorausgehenden Ansprüche, **dadurch gekennzeichnet, dass** die Aufstelleinrichtung (12) zwei Schubketten (13) aufweist, die an gegenüberliegenden Randbereichen des Dachelements (2) angeordnet sind.

6. Aufstellbares Fahrzeugdach nach einem der vorausgehenden Ansprüche, **dadurch gekennzeichnet, dass** die Aufstelleinrichtung (12) eine Antriebseinrichtung (14) für die Verlagerung der mindestens einen Schubkette (13) aufweist.

7. Aufstellbares Fahrzeugdach nach einem der vorausgehenden Ansprüche, **dadurch gekennzeichnet, dass** die Aufstelleinrichtung (12) zwei oder mehr Schubketten (13) aufweist, die jeweils mit einer der betreffenden Schubkette (13) zugeordneten Antriebseinrichtung (14) verlagert werden können, wobei die zwei oder mehreren Antriebseinrichtungen (14) miteinander synchronisiert betätigt werden können.

8. Aufstellbares Fahrzeugdach nach einem der vorausgehenden Ansprüche, **dadurch gekennzeichnet, dass** die mindestens eine Schubkette (13) eine ausfahrbare Länge von mehr als 40 cm, vorzugsweise von mehr als 60 cm aufweist.

9. Aufstellbares Fahrzeugdach nach einem der vorausgehenden Ansprüche, **dadurch gekennzeichnet, dass** zur Unterstützung der Verlagerung des Dachelements (2) mindestens eine Gasdruckfeder zwischen dem Dachelement (2) und dem Rahmen (4) angeordnet ist, mit welcher eine das Dachelement (2) von dem Rahmen (4) weg verlagernde Federkraft erzeugt wird.

10. Aufstellbares Fahrzeugdach nach einem der vorausgehenden Ansprüche, **dadurch gekennzeichnet, dass** die Schubkette (13) von dem Dachelement (2) und/oder von dem Rahmen (4) gelöst werden kann, um im Bedarfsfall eine manuelle Verlagerung des Dachelements (2) zu ermöglichen.

## Claims

1. Raiseable vehicle roof with a displaceable roof element (2) and with a support device with which the roof element (2) is supported displaceably on a frame (4) surrounding a roof opening (3) of a vehicle, so that the roof element (2) covers the roof opening (3) in a closing position and in an opening position is spaced at a distance, at least in areas, from the roof opening (3), **characterised in that** the support device comprises a raising device (12) with at least one extendable push chain (13), which can be fixed between the frame (4) and the roof element (2) and displaces the roof element (2) away from the frame (4) during an extension movement of the push chain (13).

2. Raiseable vehicle roof according to claim 1, **characterised in that** the support device is configured such that the roof element (2) is supported pivotably along a lateral edge of the roof element (2) about a pivot axis arranged on the frame (4) of the roof opening (3), and the roof element (2) is pivoted about the pivot axis by an extension movement of the push chain (13).

3. Raiseable vehicle roof according to claim 1, **characterised in that** the support device is configured such that the roof element (2) is displaceable away from the frame (4) surrounding the roof opening (3) along all lateral edges of the roof element (2).

4. Raiseable vehicle roof according to claim 3, **characterised in that** the roof element (2) can be fixed at a first end (7) by a scissor-type pivot mechanism (8) on the frame (4), and that the at least one extendable push chain (13) of the raising device (12) is engaged with the roof element (2) spaced at a distance from the scissor-type pivot mechanism (8).

5. Raiseable vehicle roof according to any one of the preceding claims, **characterised in that** the raising device (12) comprises two push chains (13), which are arranged on opposite edge regions of the roof element (2) .

6. Raiseable vehicle roof according to any one of the preceding claims, **characterised in that** the raising device (12) comprises a drive device (14) for displacing the at least one push chain (13).

7. Raiseable vehicle roof according to any one of the preceding claims, **characterised in that** the raising device (12) comprises two or more push chains (13), which can each be displaced by a drive device (14) associated with the respective push chain (13), wherein the two or more drive devices (14) can be actuated synchronised with one another.

8. Raiseable vehicle roof according to any one of the preceding claims, **characterised in that** the at least one push chain (13) has an extendable length of more than 40 cm, preferably of more than 60 cm.

9. Raiseable vehicle roof according to any one of the preceding claims, **characterised in that** to support the displacement of the roof element (2), at least one gas pressure spring is arranged between the roof element (2) and the frame (4), with which spring a spring force displacing the roof element (2) away from the frame (4) is generated.

10. Raiseable vehicle roof according to any one of the preceding claims, **characterised in that** the push chain (13) can be detached from the roof element (2) and/or from the frame (4) in order to enable manual displacement of the roof element (2) if necessary.

## Revendications

1. Toit de véhicule pouvant être relevé avec un élément de toit (2) pouvant être déplacé et avec un dispositif de palier, avec lequel l'élément de toit (2) est monté de manière à pouvoir être déplacé au niveau d'un cadre (4) entourant une ouverture de toit (3) d'un véhicule de sorte que l'élément de toit (2) recouvre dans une position fermée l'ouverture de toit (3) et écarté au moins par zones de l'ouverture de toit (3) dans une position ouverte, **caractérisé en ce que** le dispositif de palier présente un dispositif de positionnement (12) avec au moins une chaîne de poussée (13) pouvant être déployée, qui peut être fixée entre le cadre (4) et l'élément de toit (2) et qui déplace l'élément de toit (2) de manière à s'éloigner du cadre (4) lors d'un mouvement de déploiement de la chaîne de poussée (13).

2. Toit de véhicule pouvant être relevé selon la revendication 1, **caractérisé en ce que** le dispositif de palier est configuré de telle manière que l'élément de toit (2) est monté de manière à pouvoir pivoter autour d'un axe de pivotement disposé au niveau du cadre (4) de l'ouverture de toit (3) le long d'une arête latérale de l'élément de toit (2) et l'élément de toit (2) est pivoté autour de l'axe de pivotement par un mouvement de déploiement de la chaîne de poussée (13).

3. Toit de véhicule pouvant être relevé selon la revendication 1, **caractérisé en ce que** le dispositif de palier est configuré de telle manière que l'élément de toit (2) peut être déplacé de manière à s'éloigner du cadre (4) entourant l'ouverture de toit (3) le long de toutes les arêtes latérales de l'élément de toit (2).

4. Toit de véhicule pouvant être relevé selon la revendication 3, **caractérisé en ce que** l'élément de toit (2) peut être fixé au niveau du cadre (4) avec un mécanisme de pivotement de cisaillement (8) au niveau d'une première extrémité (7), et que l'au moins une chaîne de poussée (13) pouvant être déployée du dispositif de positionnement (12) est en liaison fonctionnelle avec l'élément de toit (2) à distance par rapport au mécanisme de pivotement de cisaillement (8).

5. Toit de véhicule pouvant être relevé selon l'une quelconque des revendications précédentes, **caractérisé en ce que** le dispositif de positionnement (12) présente deux chaînes de poussée (13), qui sont disposées au niveau de zones de bord se faisant face de l'élément de toit (2).

6. Toit de véhicule pouvant être relevé selon l'une quelconque des revendications précédentes, **caractérisé en ce que** le dispositif de positionnement (12) présente un dispositif d'entraînement (14) pour le déplacement de l'au moins une chaîne de poussée (13).

7. Toit de véhicule pouvant être relevé selon l'une quelconque des revendications précédentes, **caractérisé en ce que** le dispositif de positionnement (12) présente deux chaînes de poussée (13) ou plus, qui peuvent être déplacées respectivement avec un dispositif d'entraînement (14) associé à la chaîne de poussée (13) concernée, dans lequel les deux dispositifs d'entraînement (14) ou plus peuvent être actionnés de manière synchronisée les uns avec les autres.

8. Toit de véhicule pouvant être relevé selon l'une quelconque des revendications précédentes, **caractérisé en ce que** l'au moins une chaîne de poussée (13) présente une longueur pouvant être déployée supérieure à 40 cm, de préférence supérieure à 60 cm.

9. Toit de véhicule pouvant être relevé selon l'une quelconque des revendications précédentes, **caractérisé en ce que** pour soutenir le déplacement de l'élément de toit (2), au moins un ressort pneumatique est disposé entre l'élément de toit (2) et le cadre (4), avec lequel une force de ressort déplaçant l'élément de toit (2) de manière à s'éloigner du cadre (4) est générée.

10. Toit de véhicule pouvant être relevé selon l'une quelconque des revendications précédentes, **caractérisé en ce que** la chaîne de poussée (13) peut être détachée de l'élément de toit (2) et/ou du cadre (4) pour permettre si besoin un déplacement manuel de l'élément de toit (2).
